# EUROPÄISCHE PATENTANMELDUNG

(11) **EP 4 186 691 A1**
(43) Veröffentlichungstag der Anmeldung: **31.05.2023**
(21) Anmeldenummer: 21211158.7
(22) Anmeldetag: 29.11.2021
(51) Int. Cl.: B32B 13/04, C04B 28/06, C04B 28/14, C04B 111/60, C04B 111/62

(54) **VERBUNDSYSTEM MIT EINEM MINERALISCHEN UNTERGRUND UND EINER POLYMERSCHICHT**

(71) Anmelder: Triflex GmbH & Co. KG, 32423 Minden (DE)
(72) Erfinder: Kassel, Bianca, 32425 Minden (DE); Schulze, Tim-Yannick, 32469 Petershagen (DE)
(74) Vertreter: König Szynka Tilmann von Renesse Patentanwälte Partnerschaft mbB Düsseldorf

(57) **Zusammenfassung**

Die Erfindung betrifft ein Verbundsystem umfassend einen mineralischen Untergrund und eine Polymerschicht, sowie ein Verfahren zur Herstellung eines Verbundsystems.

## Beschreibung

Die Erfindung betrifft ein Verbundsystem umfassend einen mineralischen Untergrund und mindestens eine Polymerschicht, sowie ein Verfahren zur Herstellung eines solchen Verbundsystems.

Verbundsysteme für die Schaffung von Böden oder Wandflächen sind vielfältig bekannt. So lehrt beispielsweise die EP 2 839 952 A1 ein Verbundsystem mit einem Untergrund aus Beton und einer Armierungsschicht aus einem Polymer und einem Gewebe. Nachteilig an vielen Verbundsystemen ist die lange Herstellungszeit, da der Beton meist mehrere Tage benötigt, um für eine Weiterverarbeitung der Fläche ausreichend ausgehärtet und getrocknet zu sein. Lange Aushärte- oder Trocknungszeiten sind unvorteilhaft, da die Flächen in dieser Zeit nicht nutzbar sind. Zudem steigen damit die Produktionskosten.

Weiterhin stellen die mechanische Stabilität und Belastbarkeit bei Verbundsystemen häufig eine große Herausforderung dar. Beispielsweise kann der Verbund der verschiedenen Systemkomponenten nicht stabil oder nicht ausreichend lange stabil und/oder es treten lokal oder in der Fläche Ablösungserscheinungen auf. Auch das Risiko von Brüchen und Rissen kann die Qualität und Nutzbarkeit eines Verbundsystems deutlich herabsetzen.

Vor diesem Hintergrund ist es Aufgabe der vorliegenden Erfindung, ein verbessertes Verbundsystem sowie ein Verfahren zu dessen Herstellung bereitzustellen.

Die Aufgabe der vorliegenden Erfindung wird durch ein Verbundsystem gemäß Anspruch 1 sowie ein Verfahren zur Herstellung eines Verbundsystems gemäß Anspruch 9 gelöst. Vorteilhafte Ausführungsformen sind der Gegenstand von Unteransprüchen.

Gelöst wird die Aufgabe der Erfindung somit durch ein Verbundsystem umfassend einen mineralischen Untergrund, der durch das Ausbringen einer Mischung umfassend Wasser und eine Zusammensetzung (nachfolgend auch "Zementmischung") enthaltend Ye'elimit-haltigen Zement (nachfolgend auch "Calcium-Sulfo-Aluminat-Zement" bzw. "CSA-Zement") und optional Füllstoff erhältlich ist, und mindestens eine Schicht mit mindestens einem Polymer (nachfolgend auch "Polymerschicht"), bevorzugt mindestens einem Polyacrylat.

Der Erfindung liegt die Erkenntnis zugrunde, dass ein mineralischer Untergrund erhältlich aus einer Mischung die als Bindemittel CSA-Zement enthält und einer Schicht mit mindestens einem Polymer ein stabiles und mechanisch belastbares Verbundsystem bilden. Besonders vorteilhaft ist, dass es schnell und einfach herstellbar ist und gleichwohl die gewünschten sehr guten Verbundeigenschaften aufweist. Diese sind beispielsweise erkennbar an den guten Haftzugfestigkeiten. Die Haftzugfestigkeit (auch Abreißfestigkeit) dient als Kennwert für die Adhäsion oder Haftung von Schichten auf Untergründen (hier der Polymerschicht auf dem mineralischen Untergrund). Sie kann mit Hilfe der Haftzugprüfung ermittelt werden.

Es hat sich herausgestellt, dass der mineralische Untergrund des erfindungsgemäßen Verbundsystems bereits wenige Stunden nach dessen Ausbringen mit der Polymerschicht belegbar ist und im Vergleich zu Verbundsystemen bei gleicher Verarbeitung mit anderen vorbekannten Zementmischungen höhere Haftzugfestigkeiten aufweist (siehe unten Beispiel 2).

Der wesentliche Bestandteil von CSA-Zementen ist die Zement-Klinkerphase Ye'elimit (mit der bauchemischen Zusammensetzung 4CaO·3Al₂O₃·SO₃), welche bei der Zugabe von Wasser zu Ettringit (3CaO·Al₂O₃·3CaSO₄·32H₂O) reagiert. Die Untergrund bildende Zusammensetzung enthält Ye'elimit und vorzugsweise ein Calciumsulfat. Die Zugabe von Calciumsulfat zu CSA-Zement fördert die Bildung von Ettringit und somit das Abbinden und die Erhärtung des Untergrunds. Durch eine geförderte Ettringitbildung kann der mineralische Untergrund binnen weniger Stunden die Belegreife erreichen.

Die Polymerschicht enthält mindestens ein Polymer, vorzugsweise ein radikalisch ausgehärtetes Polymer. In einer besonders vorteilhaften Ausführungsform besteht die Polymerschicht aus mindestens einem Polymer, vorzugsweise mindestens einem radikalisch ausgehärtetem Polymer. Eine solche Polymerschicht, insbesondere umfassend oder bestehend aus Polymethylmethacrylat (PMMA), kann bereits nach nur wenigen Stunden (z.B. bereits nach 2 bis 3 Stunden) begehbar und voll belastbar sein. Eine Fläche, die mit einem solchen Verbundsystem versehen ist, kann somit sehr schnell wieder einer Nutzung zugeführt werden.

Erfindungsgemäße Verbundsysteme können nicht nur schneller wieder nutzbar sein, sondern auch unabhängiger von der Witterung hergestellt werden. Mineralische Untergründe mit langsamen Belegreifen können "verdursten", d.h. ihnen wurde das für die Hydratation notwendige Wasser durch bspw. Hitze und/oder Wind entzogen wodurch die Erhärtung verfrüht zum Stillstand kommt. Die Beschichtung langsam erhärtender Untergründe kann außerdem durch unbeständiges Wetter, besonders durch Niederschlag, beeinträchtigt werden. Erfindungsgemäße Verbundsysteme sind in vergleichbar kurzen Zeiten herstellbar, wodurch sich deren Herstellung auch kurzfristig planen lässt.

Die Polymerschicht ist erhältlich aus einem aushärtbaren Harz. Ein aushärtbares Harz umfasst Monomere und/oder gelösten Polymere. Vorzugsweise besteht das aushärtbare Harz aus Monomeren und/oder Polymeren. Ein aushärtbares Harz kann durch Polymerisationsreaktionen (etwa Polyaddition, Polykondensation, oder radikalische, anionische, oder kationische Polymerisation) ausgehärtet werden. Hilfsweise und bevorzugt kann dem aushärtbaren Harz zur Härtung ein Härter hinzugefügt werden. Härter können beispielsweise Katalysatoren und oder Initiatoren sein. Entsprechende Stoffe sind dem Fachmann bekannt. Sofern nachfolgend nicht ausdrücklich anders erwähnt, umfasst der Begriff "Polymer" jeweils auch den Begriff "Copolymer".

Die Polymerschicht umfasst vorzugsweise ein Polymer ausgewählt aus der Gruppe der folgenden Verbindungen oder Mischungen daraus: Polyurethan (PU), Epoxidharz (EP-Harz), Polyacrylat, Polymethacrylat, und Polymethylmethacrylat (PMMA). Diese Angaben gelten sowohl für die gelösten Polymere im Harz als auch für die von den Monomeren gebildeten Polymere in der ausgehärteten Polymerschicht.

Vorzugsweise enthält mindestens eine Polymerschicht mindestens ein radikalisch aushärtbares oder ausgehärtetes Polymer. Bevorzugt wird die Polymerschicht durch radikalische Polymerisation eines Harzes hergestellt. In einer Ausführungsform umfasst die Polymerschicht synthetisches Harz. Als Harz werden bevorzugt Acrylatharze eingesetzt. Bevorzugter werden Methacrylatharze verwendet. Besonders bevorzugt werden Methylmethacrylatharze eingesetzt. PMMA härtet besonders schnell aus und ist in der Regel nach nur wenigen Stunden voll belastbar. Polymerschichten umfassend PMMA können aus Harzen enthaltend zumindest Methylmethacrylat, vorzugsweise zusätzlich enthaltend PMMA, ausgehärtet werden. Analoges gilt für Polymethacrylate und Methacrylate, sowie Polyacrylate und Acrylate.

In einer weiteren bevorzugten Ausführungsform enthält mindestens eine Polymerschicht ein durch Polyaddition ausgehärtetes Polymer, vorzugsweise Polyurethan oder ein Epoxidharz. Dem Fachmann ist klar, dass der Begriff "Epoxidharz" sowohl aushärtbare als auch ausgehärtete Zusammensetzungen beschreibt und in welchem Kontext welcher Begriff gemeint ist: bei dieser Ausführungsform werden aushärtbare Epoxidharze bei der Herstellung ausgebracht, um ausgehärtete Epoxidharze im Erzeugnis zu erhalten.

Es hat sich als vorteilhalft herausgestellt, wenn das Verbundsystem mindestens zwei Polymerschichten aufweist. Verbundsysteme mit mehreren Polymerschichten können höhere Haftzugwerte aufweisen. Hierin wird die Polymerschicht in Kontakt mit dem mineralischen Untergrund als "Grundierungsschicht" bezeichnet. Vorzugsweise weist das aushärtbare und/oder ausgehärtete Harz welches als Grundierungsschicht ausgebracht wird eine hohe Stabilität gegenüber der Restfeuchte und der Basizität des mineralischen Untergrunds auf. Es hat sich herausgestellt, dass besonders EP-Harze und Acrylatharze, vorzugsweise Methacrylatharze, besonders bevorzugt Methylmethacrylatharze zur Bildung von Grundierungsschichten geeignet sind.

In einer bevorzugten Ausführungsform weist das Verbundsystem eine Grundierungsschicht und mindestens eine weitere Polymerschicht auf.

Weiter hat sich herausgestellt, dass Epoxidharze für Grundierungsschichten besonders geeignet sind, wenn die aufliegende Polymerschicht ein Polyurethanharz umfasst. In einer bevorzugten Ausführungsform umfasst das Verbundsystem eine Grundierungsschicht enthaltend ein Epoxidharz und eine aufliegende Polymerschicht enthaltend ein Polyurethan. Noch bevorzugter ist das Polymer in der Grundierungsschicht ein Epoxidharz und das Polymer in einer aufliegenden Schicht ein Polyurethan.

In einer weiteren Ausführungsform sind die Polymere der Grundierungsschicht und einer aufliegenden Polymerschicht radikalisch ausgehärtet. Ausführungsformen in denen die Polymere der Grundierungsschicht und einer weiteren Polymerschicht Acrylatharze sind, können (wie oben angeführt) schnell hergestellt werden und hohe Haftzugwerte aufweisen. In einer bevorzugten Ausführungsform umfasst das Polymer in der Grundierungsschicht und einer aufliegenden Polymerschicht ein Polyacrylat, bevorzugter ein Polymethacrylat, besonders bevorzugt ein Polymethylmethacrylat. In einer bevorzugteren Ausführungsform ist das Polymer in der Grundierungsschicht und einer aufliegenden Polymerschicht ein Polyacrylat, besonders ein Polymethacrylat, am meisten bevorzugt ein Polymethylmethacrylat.

Erfindungsgemäße Verbundsysteme können durch das Einbringen eines Gewebes in eine Polymerschicht verstärkt werden. Eine Polymerschicht enthaltend ein Gewebe wird nachfolgend auch als "Armierungsschicht" bezeichnet. Gewebe können sich materialverstärkend und rissüberbrückend auf die Polymerschicht und somit das Verbundsystem auswirken. Das Gewebe kann vorzugsweise aus Glasfasern, Carbonfasern, Kunststofffasern, Metallfasern, Aramidfasern oder Mineralfasern, oder Mischungen daraus bestehen. In einer Ausführungsform umfasst das Verbundsystem eine Polymerschicht enthaltend ein Gewebe. Vorzugsweise umfasst das Verbundsystem eine Grundierungsschicht und eine Armierungsschicht.

Vorteilhafterweise weist das Gewebe eine gemittelte Maschenweite zwischen 1 und 10 mm, bevorzugt zwischen 2 und 8 mm und besonders bevorzugt zwischen 4 und 6 mm auf. Besonders vorteilhaft besitzt das Gewebe eine gemittelte Ketten-Maschenweite von 5 mm und eine gemittelte Schuss-Maschenweite von 6 mm.

In einer bevorzugten Ausführungsform der Erfindung weist das erfindungsgemäße Verbundsystem den folgenden Schichtenaufbau auf:
(a) mineralischer Untergrund,
(b) Grundierungsschicht,
(c) Armierungsschicht.

In einer bevorzugten Ausführungsform der Erfindung weist das erfindungsgemäße Verbundsystem den folgenden Schichtenaufbau auf:
(a) mineralischer Untergrund,
(b) Grundierungsschicht enthaltend Epoxidharz
(c) Armierungsschicht enthaltend Polyurethan.

In einer besonders bevorzugten Ausführungsform der Erfindung weist das erfindungsgemäße Verbundsystem den folgenden Schichtenaufbau auf:
(a) mineralischer Untergrund,
(b) Grundierungsschicht enthaltend Polyacrylat, bevorzugt Polymethylacrylat, besonders bevorzugt PMMA,
(c) Armierungsschicht enthaltend Polyacrylat, bevorzugt Polymethylacrylat, besonders bevorzugt PMMA.

Zusätzlich kann die Polymerschichten noch mit einem granulären Material ("Streumaterial") abgestreut werden um eine höhere Rutschfestigkeit (Rauigkeit) zu erzielen. Geeignete granuläre Materialien sind bspw. Quarzsand, Korund oder geschmolzene synthetische Mineralien. Dies erfolgt vorzugsweise in frischem, d.h. nicht vollständig ausgehärtetem, Zustand. Das Streumaterial ist vorzugsweise nach Erhärtung der Polymerschicht in diese eingebunden und kann bei Überschichtung und nach dem anschließenden Entfernen des Überschusses mit einer aufliegenden Polymerschicht noch zusätzlich gebunden und ummantelt werden.

Die erfindungsmäße Armierungsschicht kann eine Schichtdicke von 1,5 bis 6 mm, bevorzugt von 2,5 bis 5 mm und besonders bevorzugt von 4 bis 4,5 mm besitzen.

Eine zusätzlich verwirklichte Grundierungsschicht kann eine Schichtdicke von 0,05 bis 0,7 mm, bevorzugt von 0,1 bis 0,6 mm und besonders bevorzugt von 0,2 bis 0,35 mm besitzen.

In einer bevorzugten Ausführungsform weist das Verbundsystem die folgenden Schichtdicken auf:
(a) Grundierungsschicht 0,2 bis 0,35 mm
(b) Armierungsschicht 4,0 bis 4,5 mm.

Bei der den erfindungsgemäßen mineralischen Untergrund bildenden Mischung umfassend Zementmischung und Wasser handelt es sich vorzugsweise um einen Estrich. Estriche sind unter anderem in der DIN EN 13813 "Estrichmörtel, Estrichmassen und Estriche - Estrichmörtel und Estrichmassen - Eigenschaften und Anforderungen" sowie in der DIN 18560 "Estriche im Bauwesen" beschrieben. Typischerweise enthalten Estriche Füllstoffe mit mittleren Korngrößen bis zu 8 mm. Ein Estrich ist üblicherweise bis zu wenigen Zentimetern dick. Vorzugsweise handelt es sich bei der erfindungsgemäß einsetzbaren Zementmischung um einen Zementestrich. Zementestrich sind in der DIN EN 13813 beschrieben.

Die Eigenschaften des Untergrunds können über die Zusammensetzung der Zementmischung variiert und eingestellt werden. Mineralische Untergründe erfindungsgemäßer Verbundsysteme können schnell die Belegreife erreichen und weiterverarbeitet werden. In einer Ausführungsform enthält die Zementmischung CSA-Zement zu mindestens 5 Gew.-%, bevorzugt, mindestens 8 Gew.-%, besonders bevorzugt mindestens 12 Gew.-%. In einer weiteren Ausführungsform besteht die Zementmischung aus CSA-Zement, bevorzugt enhält sie CSA-Zement bis zu 90 Gew.-%, bevorzugter bis zu 35 Gew.-%, besonders bevorzugt bis zu 25 Gew.-%. In einer bevorzugten Ausführungsform enthält die Zementmischung mindestens 5 Gew.-%, bevorzugt zu 5-90 Gew.-%, bevorzugter zu 8-35 Gew.-%, besonders bevorzugt zu 12-25 Gew.-% CSA-Zement.

Da Ye'elimit das wesentliche Bindemittel in CSA-Zementen ist, wirkt sich ein hoher Ye'elimitanteil im CSA-Zement und somit in der Zementmischung positiv auf ein schnelles Erreichen der Belegreife aus. Die mineralogische Zusammensetzung von Zementen kann mit Hilfe von Röntgenpulverdiffraktometrie bestimmt werden.

In einer bevorzugten Ausführungsform weist der CSA-Zement Ye'elimit zu mindestens 30 Gew.-%, bevorzugter mindestens 40 Gew.-%, besonders bevorzugt mindestens 50 Gew.-% auf.

In einer Ausführungsform enthält die Zementmischung Ye'elimit zu mindestens 2 Gew.-%, bevorzugt mindestens 3 Gew.-%, bevorzugter mindestens 5 Gew.-%. Vorzugsweise besteht die Zementmischung aus Ye'elimit, bevorzugt bis zu 90 Gew.-%, bevorzugter bis zu 35 Gew.-%, besonders bevorzugt bis zu 25 Gew.-%.

In einer bevorzugten Ausführungsform besteht die Zementmischung zu mindestens 2 Gew.-%, bevorzugt zu 2-90 Gew.-%, bevorzugter zu 3-35 Gew.-%, besonders bevorzugt zu 5-25 Gew.-% aus Ye'elimit.

Ye'elimit (und somit CSA-Zement) umfasst die (bauchemischen) Komponenten CaO, SO₃ und Al₂O₃. In einer bevorzugten Ausführungsform enthält der CSA-Zement die Komponenten CaO zu 36-46 Gew.-%, SO₃ zu 7-14 Gew.-% und Al₂O₃ zu 25-33 Gew.-%.

In einer bevorzugten Ausführungsform umfasst der CSA-Zement zusätzlich einen oder mehrere der folgenden Komponenten: Fe₂O₃, SiO₂, MgO. Bevorzugter umfasst der CSA Zement bis zu 1,5 Gew.-% Fe₂O₃, bis zu 12 Gew.-% SiO₂ und/oder bis zu 5 Gew.-% MgO. Ein CSA-Zement umfassend bis zu 1,5 Gew.-% Fe₂O₃, bis zu 12 Gew.-% SiO₂ und bis zu 5 Gew.-% MgO wird besonders bevorzugt. Die chemische Zusammensetzung von Zement kann beispielsweise durch Atomabsorptionsspektroskopie (AAS) oder energiedispersive Röntgenspektroskopie (EDX) ermittelt werden.

In einer besonders bevorzugten Ausführungsform enthält der CSA-Zement folgende Komponenten: 36-46 Gew.-% CaO, 7-14 Gew.-% SO₃, 25-33 Gew.-% Al₂O₃, bis zu 1,5 Gew.-% Fe₂O₃, bis zu 12 Gew.-% SiO₂ und bis zu 5 Gew.-% MgO.

Die Ettringitbildung von CSA-Zement kann durch die Zugabe von Calciumsulfat gefördert, d.h. erhöht und beschleunigt, werden. In einer Ausführungsform umfasst die Zementmischung ein Calciumsulfat. Dem Fachmann sind mehrere Calciumsulfate bekannt, beispielweise CaSO₄ (Anhydrit) CaSO₄·2H₂O (Gips) und CaSO₄·½H₂O (Hemihydrat) oder Mischungen daraus. Bevorzugt umfasst die Zementmischung Calciumsulfat als Anhydrit.

Die Reaktion von Ye'elimit (4CaO·3Al₂O₃·SO₃) und Calciumsulfat zu Ettringit (3CaO·Al₂O₃·3CaSO₄·32H₂O) kann maßgeblich durch die Mischverhältnisse von Ye'elimit und Calciumsulfat in der Zementmischung gesteuert werden. In einer Ausführungsform enthält die Zementmischung Calciumsulfat im Gewichtsverhältnis zu Ye'elimit bis zu 1,10, bevorzugt bis zu 0,95, bevorzugter bis zu 0,75. In einer bevorzugten Ausführungsform enthält die Zementmischung Calciumsulfat im Gewichtsverhältnis zu Ye'elimit von mindestens 0,05, bevorzugter 0,15, besonders bevorzugt 0,20.

Vorzugsweise enthält die Zementmischung Calciumsulfat im Gewichtsverhältnis zu Ye'elimit bis zu 1,10, bevorzugt bis zu 0,95, bevorzugter von 0,15 bis 0,95, besonders bevorzugt von 0,20 bis 0,75. In einer bevorzugten Ausführungsform enthält die Zementmischung Calciumsulfat im Gewichtsverhältnis zu Ye'elimit von 0,05 bis 1,10, bevorzugter von 0,15 bis 0,95, besonders bevorzugt von 0,20 bis 0,75.

Ferner kann die Zementmischung zumindest einen weiteren Zement, bevorzugt Portlandzement, umfassen. Dieser führt vorteilhafterweise zu noch höheren Druckfestigkeitswerten. Andere Zementsorten sind ebenfalls denkbar. In einer Ausführungsform der Erfindung enthält die Zementmischung Portlandzement. Bevorzugt enthält Zementmischung Portlandzement bis zu 10 Gew.-%, bevorzugter bis zu 5 Gew.-%, besonders bevorzugt bis zu 2 Gew.-%.

In einer weiteren Ausführungsform der Erfindung enthält die Zementmischung zumindest einen Füllstoff. Füllstoffe können beispielsweise Sand, Kies und/oder Splitt oder ein Gemisch aus diesen sein. Füllstoffe sind kostengünstiger als Zemente, wodurch hohe Füllstoffanteile zumindest die Wirtschaftlichkeit erfindungsgemäßer Verbundsysteme erhöhen können. In einer bevorzugten Ausführungsform umfasst die Zementmischung Füllstoff bis zu 95 Gew.-%, bevorzugter bis zu 93 Gew.-%, besonders bevorzugt bis zu 87 Gew.-%, ganz besonders bevorzugt bis zu 82 Gew.-%. Es hat sich herausgestellt, dass Verbundsysteme deren mineralische Untergründe, die mit solchen Zementmischungen erhältlich sind, eine höhere Druckfestigkeit aufweisen können.

Weiterhin umfasst die Zementmischung für die Herstellung des Untergrunds in einer Ausführungsform zusätzlich Dispersionspulver. Vorzugsweise im Bereich von bis zu 6 Gew.-%, bevorzugter bis zu 3 Gew.-%, besonders bevorzugt bis zu 2 Gew.-%. Typischerweise werden Dispersionspulver durch Sprühtrocknung von Polymerdispersionen hergestellt. Durch Lösung in Wasser (Redispersion) setzen die Dispersionspulver die Polymerpartikel wieder frei, sodass das gelöste Dispersionspulver üblicherweise dieselben Eigenschaften wie die Originaldispersion haben kann. Dispersionspulver sind dem Fachmann bekannt und enthalten beispielsweise Vinylacetat-Ethylen-Polymere oder Vinylchlorid-Co- und Terpolymere. Dispersionspulver sorgen üblicherweise zum Beispiel für eine bessere Verarbeitungseigenschaft und eine bessere Untergrundhaftung des jeweiligen Bauprodukts. Vorteilhafterweise erweist sich der Einsatz von Dispersionspulvern in Bezug auf das erfindungsgemäße Verfahren als eine Verbesserung hinsichtlich der Haftungsvermögens, Elastizität und Wasserdurchlässigkeit des Untergrunds, sowie der Dauer der Verarbeitungsfähigkeit der Untergrund bildenden Mischung.

In einer weiteren Ausführungsform des erfindungsgemäßen Verfahrens umfasst die Zementmischung Feinanteile. Diese können beispielsweise Mahlstaub und/oder Quarzmehl und/oder Kreide sein. In einer bevorzugten Ausführungsform enthält die Zementmischung Feinanteile im Bereich zu 20 Gew.-%, bevorzugter 2-15 Gew.-%, besonders bevorzugt 3-10 Gew.-%. Die Zugabe solcher Feinanteile führt vorteilhafterweise zu einer verbesserten Oberfläche des mineralischen Untergrunds.

Ferner kann die Zementmischung in einer weiteren Ausführungsform einen oder mehrere sonstige Bestandteile enthalten. Zu solchen Bestandteilen zählen bspw. Fließmittel, Beschleuniger, Verzögerer, Fasern, Verdicker und Porenbildner. Fließmittel können als Dispergiermittel fungieren, die der Agglomeration von Betonpartikeln entgegenwirken, eingeschlossenes Wasser freisetzen und zu einer Optimierung der Verformbarkeit der Untergrund bildenden Mischung dienen. Besonders bevorzugte Fließmittel sind Polycarboxylatether. Beschleuniger können das Erstarren oder das Erhärten des mineralischen Untergrunds beschleunigen; Verzögerer bewirken das Gegenteil.

In einer bevorzugten Ausführungsform umfasst die Zementmischung bis zu 5 Gew.-%, bevorzugt bis zu 3 Gew.-%, besonders bevorzugt bis zu 1,5 Gew.-%, sonstige Bestandteile, insbesondere Fließhilfsmittel, Beschleuniger, Verzögerer, Fasern, Verdicker und/oder Porenbilder . Definitionen und Anforderungen an solche Zusätze sind bekannt aus der EN 934 "Zusatzmittel für Beton, Mörtel und Einpressmörtel".

In einer besonders bevorzugten Ausführungsform umfasst die Zementmischung
- Calcium-Sulfo-Aluminat-Zement zu mindestens 5 Gew.-%, bevorzugt zu 5-90 Gew.-%, bevorzugter zu 8-35 Gew.-%, besonders bevorzugt zu 12-25 Gew.-%,
- 0-1,10, bevorzugt 0-0,95, bevorzugter 0,15-0,95, besonders bevorzugt 0,20-0,75 Anteile Calciumsulfat im Gewichtsverhältnis zu Ye'elimit,
- 0-10 Gew.-%, bevorzugt 0-5 Gew.-%, bevorzugter 0-2 Gew.-% Portlandzement,
- 0-6 Gew.-%, bevorzugt 0-3 Gew.-%, bevorzugter 0-2 Gew.-% Dispersionspulver,
- 0-95 Gew.-%, bevorzugt 0-93 Gew.-%, bevorzugter 0-87 Gew.-%, besonders bevorzugt 0-82 Gew.-% Füllstoff,
- 0-20 Gew.-%, bevorzugt 2-15 Gew.-%, bevorzugter 3-10 Gew.-% Feinanteile,
- 0-5 Gew.-%, bevorzugt 0-3 Gew.-%, bevorzugter 0-1,5 Gew.-% sonstige Bestandteile, insbesondere Fließhilfsmittel, Beschleuniger, Verzögerer, Fasern, Verdicker und/oder Porenbilder.

Es hat sich herausgestellt, dass durch die Verwendung eines oben genannten Zements für erfindungsgemäße Untergründe diese trotz hoher Wasserzement-Werte früh erhärten und schnell belegreif sein können. Der Wasserzementwert (w/z-Wert) ist das Verhältnis zwischen der Masse des wirksamen Wassers und der Masse des Bindemittels. Aufgrund der chemischen Bindung des Wassers im Ettringit können beim Ausbringen eines mineralischen Untergrunds eines erfindungsgemäßen Verbundsystems sowohl hohe als auch niedrige w/z-Werte eingesetzt werden. In einer bevorzugten Ausführungsform liegt der Wasserzementwert der Zusammensetzung zur Herstellung eines mineralischen Untergrunds zwischen 0,2-1,0, bevorzugt 0,35-0,60, besonders bevorzugt 0,40-0,50.

In einer weiteren Ausführungsform der Erfindung weist der mineralische Untergrund einen Restfeuchtegehalt von maximal 5 CM-% auf, bevorzugt von maximal 4 CM-%. Vorteilhafterweise ist der Untergrund mit einem Restfeuchtegehalt von maximal 5% stabil und trocken genug, um weiter verarbeitet zu werden. So ist es möglich, den Untergrund zu schleifen oder weitere Schichten aufzubringen. Für einige Bodenbeläge, die auf das Verbundsystem aufgebracht werden können, ist ein maximaler Restfeuchtegehalt von 4 CM-% ausreichend, damit es nachträglich nicht zu Feuchtigkeitsschäden kommt. Methoden zur Bestimmung des Restfeuchtegehalts sind aus der DIN 18560 bekannt und umfassen die Calciumcarbid-Methode (CM-Methode), gravimetrische Bestimmung (Darrmethode) sowie elektrische Messverfahren wie widerstandsbasierte oder kapazitative Methoden. Elektrische Messverfahren erlauben eine nichtdestruktive und schnelle Bestimmung des Restfeuchtegehalts und in äquivalente Werte für die Bestimmung durch die CM-Methode (in CM-%) konvertiert werden. Der Restfeuchtegehalt wird bevorzugt mittels kapazitativer Methoden bestimmt.

In einer Ausführungsform erreicht der mineralische Untergrund bei Temperaturen zwischen 10 °C und 35 °C einen durch kapazitative Methoden bestimmten Restfeuchtegehalt bis zu 5 CM-% in bis zu 16 h, bevorzugt bis zu 8 h, besonders bevorzugt bis zu 240 min, am meisten bevorzugt bis zu 120 min.

Vorzugsweise wird das erfindungsgemäße Verbundsystem zum Aufbau einer Fläche mit einer Neigung eingesetzt. Das erfindungsgemäße Verbundsystem kann in dieser Ausführungsform daher als Gefällestrich dienen. Vorzugsweise kann damit eine Fläche mit einem Neigungswinkel von 1,5% bis 2% hergestellt werden, d.h. die Fläche weist ein Gefälle von 1,5 cm bis 2,5 cm pro laufendem Meter auf. Durch einen solchen Gefälleestrich wird das Abfließen von Wasser deutlich erleichtert, wodurch z.B. das Aufstauen von Feuchtigkeit verhindert werden kann. Außerdem können zugleich feine Schmutzpartikel weggespült werden. Diese Anwendung ist beispielsweise bei Balkonen oder Terrassen von besonderer Bedeutung.

Die Erfindung betrifft zudem ein Verfahren zur Herstellung eines Verbundsystems umfassend der Schritte
a) Herstellen eines mineralischen Untergrunds durch Ausbringen einer Mischung umfassend Wasser und eine Zusammensetzung enthaltend Ye'elimit-haltigen Zement (Calcium-Sulfo-Aluminat-Zement) und optional Füllstoff,
b) optional Bearbeiten des mineralischen Untergrunds, bevorzugt Schleifen,
c) optional Grundieren des Untergrunds, vorzugsweise mit einem aushärtbaren Harz,
d) Ausbringen eines aushärtbaren Harzes.

Es ist besonders bevorzugt, dass der Schritt d) maximal bis zu 20 h, bevorzugt maximal bis zu 12 h, weiter bevorzugt maximal bis zu 3 h nach Schritt a) erfolgt. Diese Angaben gelten insbesondere für eine Verarbeitung bei Umgebungstemperaturen zwischen 10 °C und 35 °C.

Durch Bearbeiten des mineralischen Untergrunds können dessen Unebenheiten entfernt werden. Dies kann zu einer stärkeren Adhäsion zwischen dem mineralischen Untergrund und der aufliegenden Polymerschicht führen. Eine bevorzugte Bearbeitungsmethode ist Schleifen.

Weitere Vorteile und Merkmale des erfindungsgemäßen Verbundsystems, des erfindungsgemäßen Verfahrens zur Herstellung eines Verbundsystems sowie des erfindungsgemäßen mehrschichtigen Verbundsystems ergeben sich nebst der Beschreibung aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche/Ausführungsformen, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar.

### BEISPIELE

### Beispiel 1: Herstellung eines erfindungsgemäßen Verbundsystems

Beispiel 1 stellt ein Beispiel eines erfindungsgemäßen Verbundsystems dar. Die Grundfläche wurde zunächst vorbehandelt von losen oder haftungsmindernden Bestandteilen befreit und getrocknet. Die Umgebungstemperatur wurde so gewählt, dass sich kein Feuchtigkeitsfilm auf der Grundfläche bildet (mind. 3 °C über dem Taupunkt).

Ein mineralische Untergrund wurde mit einem Wasserzementwert von 0,45 und der Zementmischung "TFSS1" enthaltend folgende Bestandteile hergestellt:
- 20 Gew.-% Calcium-Sulfo-Aluminat-Zement und Calciumsulfat, mit einem Gewichtsverhältnis von Calciumsulfat zu Ye'elimit zwischen 0,25 und 0,43,
- 1 Gew.-% Dispersionspulver,
- 7 Gew.-% Feinanteile,
- 0,5 Gew.-% eines Disaccharids als Verzögerer und Fließmittel,
- <72 Gew.-% Füllstoffe.

Dabei wurde das Wasser der Zementmischung bei laufendem Mischer hinzugegeben. Die Rührzeit beträgt mindestens 2 Minuten. Die fertig gerührte Mischung wurde anschließend auf die Grundfläche aufgetragen und mit einer Glättekelle glattgezogen. Die für eine gute Verarbeitbarkeit der Mischung bevorzugte Umgebungstemperatur liegt im Bereich von 10 °C bis 35 °C. Bei einer Umgebungstemperatur von 20 °C ist der mineralische Untergrund nach etwa einer Stunde begehbar und nach etwa 3 Stunden bearbeitbar.

Die Beschichtung mit einem aushärtbaren PMMA-Harz erfolgte nach dem Schleifen des Untergrunds. Dazu wurde eine Lösung aus PMMA-Harz auf den Estrich aufgetragen und glattgestrichen.

Ein solch hergestelltes Verbundsystem ist nach etwa 5 Stunden bei einer Umgebungstemperatur von im Wesentlichen 20 °C voll belastbar.

Die Eigenschaften eines solch hergestellten Verbundsystems V1a sind in Tabelle 1 dargestellt.

**Tabelle 1 Mechanische Eigenschaften des Verbundsystems V1a.**

| Parameter | Einheit | Mindestwert | Sollwert | Stand der Technik | V1a |
|---|---|---|---|---|---|
| Druckfestigkeiten | [N/mm²] | 5 | 25-35 | 35,0^{a} | 38,2^{b} |
| Biegezugfestigkeiten | [N/mm²] | 1 | 6-7 | 5,4^{a} | 6,6^{b} |
| Haftzugfestigkeiten | [N/mm²] | 0,2 | 1,5 | 1,9^{a} | 2,0^{b} |
| Schlagfestigkeit | [Nm] | | | n.B. | 6,0 |

| | | | | | |
|---|---|---|---|---|---|
| ^{a}: Werte nach 28d Trocknungszeit ermittelt; ^{b}: Werte nach 7d Trocknungszeit ermittelt. | | | | | |

Folgende mechanische Werte/Eigenschaften in Abhängigkeit der Trocknungszeit sind für V1a in Tabelle 2 dargestellt:

**Tabelle 2 Mechanische Eigenschaften der Verbundsystems V1a in Abhängigkeit der Trocknungszeit.**

| Parameter | Trocknungszeit in Tagen | V1a |
|---|---|---|
| Druckfestigkeit [N/mm²] | 1 | 33,9 |
| | 5 | 39,9 |
| | 7 | 38,2 |
| Biegezugfestigkeit [N/mm²] | 1 | 6,6 |
| | 5 | 6,0 |
| | 7 | 6,6 |
| Haftzugfestigkeit [N/mm²] | 1 | 1,73 |
| | 4 | 1,94 |
| | 7 | 2,00 |

In einem weiteren Beispiele wurde das Verbundsystem V1b analog zu V1a hergestellt. Hierbei wurde die Zement mineralische Untergrund wurde mit einem Wasserzementwert von 0,45 und der Zementmischung "TFSS2" enthaltend folgende Bestandteile hergestellt:
- 20 Gew.-% Calcium-Sulfo-Aluminat-Zement und Calciumsulfat, mit einem Gewichtsverhältnis von Calciumsulfat zu Ye'elimit zwischen 0,25 und 0,43,
- 1 Gew.-% Dispersionspulver,
- 7 Gew.-% Feinanteile,
- <0,01 Gew.% Verzögerer,
- <0,02 Gew.% Fließmittel,
- <72 Gew.-% Füllstoffe.

Die mechanischen Eigenschaften des V1b in Abhängigkeit der Trocknungszeit sind in Tabelle 3 angegeben:

**Tabelle 3 Mechanische Eigenschaften der Verbundsystems V1b in Abhängigkeit der Trocknungszeit.**

| Parameter | Einheit | Trocknungszeit in Tagen | | |
|---|---|---|---|---|
| | | 7 | 14 | 21 |
| Biegezugfestigkeit | [N/mm²] | 5,9 | 6,4 | 6,7 |
| Druckfestigkeit | [N/mm²] | 43,2 | 41,2 | 42,1 |

### Beispiel 2: Vergleichsversche

Folgend wurden die erfindungsgemäße Verbundsysteme V2, V6 und V8 mit fünf nichterfindungsgemäßen Verbundsystemen (V3, V4, V5, V7, V9) verglichen. V2 weist sowohl hierbei die höchste Haftzugfestigkeit auf und lässt sich auch am schnellsten erfolgreich herstellen. Sofern nicht anders ausgeführt, gelten die dortigen Angaben entsprechend.

### 2.1 Mineralische Untergründe

Für die Herstellung der erfindungsgemäßen Verbundsysteme wurde die Zementmischung "TFSS2" (s. Beispiel 1) eingesetzt.

Für die Vergleichsbeispiele wurden die folgenden kommerziellen Zementgemische eingesetzt:
- BV ist ein Zement nach DIN EN 197 und enthält klassierte, mineralische Zuschläge bis 8mm. Estriche hergestellt aus BV können die Festigkeitsklassen C 25/30 gemäß DIN EN 206 und CT-C25-F4 gemäß DIN EN 13813 aufweisen.
- VFZ ist ein auf Belit (2CaO·SiO₂) basierender (40-60 Gew.-% der mineralogischen Zusammensetzung) Zement mit schneller Abbindung und hoher Sulfatbeständigkeit.
- SP ist ein kunststoffvergütetes ternäres Spezialbindemittel mit früher Belegreife (begehbar nach 2-3h), dessen Estriche nach 28 Tagen die Güteklasse CT-C50-F6 erreichen können.

Mit Hilfe vorgefertigter Holzformen wurden Vollkörper mit den Maßen 30 cm × 30 cm × 5cm (Höhe × Breite × Tiefe) erstellt. Alle Untergründe wurden nach Mischanleitung und technischem Datenblatt angefertigt. Dem Zement VFZ musste ein Verzögerer hinzugefügt werden, damit dieser Flächig aufgetragen werden konnte. Die Temperatur bei Beginn der Arbeit beträgt 19°C.

### 2.2 Vorbehandlung

Vor der Beschichtung wurden die mineralischen Untergründe nach einer von drei Varianten vorbehandelt (VB1 bis VB3). Bei allen Vorbehandlungen wurden die mineralischen Untergründe nach 60 Minuten mit Hilfe eines Winkelschleifers und einer Schleifscheibe der Zementleim geschliffen. Dieser Schritt war für die Untergründe erhältlich mit SP erst nach 3 Stunden möglich. Anschließend wurde die Feuchte der mineralischen Untergründe durch Fünffachmessung bestimmt; die Mittelwerte der Ergebnisse befinden sich in Tabelle 4:

**Tabelle 4 Restfeuchtegehalt der mineralischen Untergründe**

| Zement | Anzeige in Digits | Restfeuchte [CM-%] |
|---|---|---|
| TFSS2 | 82^{a} | 3,3 |
| TFSS2 | 95^{a} | 4,0 |
| TFSS2 | 89^{a} | 3,7 |
| TFSS2 | 100^{a} | 4,4 |
| BV | 195^{a} | >6,2 |
| BV | 192^{a} | >6,2 |
| VFZ | 190^{a} | >6,2 |
| VFZ | 192^{a} | >6,2 |
| SP | 147^{b} | >6,2 |
| SP | 138^{b} | >6,2 |
| SP | 145^{b} | >6,2 |
| SP | 148^{b} | >6,2 |

| | | |
|---|---|---|
| ^{a}: Messung nach 1h; ^{b}: Messung nach 24h | | |

Der TFSS2 hatte im Vergleich zu den anderen Zementgemischen einen deutlich geringeren Restfeuchtegehalt. Messungen von BV und VFZ lagen an der Obergrenze (199 Digits) des Messinstruments (Hydromette UNI 2) bzw. der Elektrode (B-60).

Direkt im Anschluss an die Messung des Restfeuchtegehalts wurden die Probekörper grundiert. In VB1 wurde anschließend mit einem PMMA-Harz grundiert; in VB3 wurde mit einem Epoxidharz grundiert und anschließend mit Quarzsand abgestreut.

### 2.3 Beschichtung / Abdichtung

In allen Verbundsystemen wurden die mineralischen Untergründe mit einer Armierungsschicht abgedichtet ("Abdichtung"). Hierzu wurden Polyestervliese (110 g/m²) mit materialverstärkenden und rissüberbrückenden Eigenschaften verwendet. Für VB1 wurden PMMA-Harze verwendet, für VB2 und VB3 wurden 2-komponentige, pigmentierte, thixotropierte Polyurethanharze (PU-Harze) verwendet.

### 2.4 Ergebnisse

Die Komponenten und Behandlungen bei der Herstellung der Verbundsysteme V2 bis V9 sowie deren Haftzugfestigkeiten, Bruchbilder und deren auftretende Häufigkeit (d.h. Anzahl der bei den Messungen beobachteten Bruchbilder) sind in Tabelle 5 zusammengefasst. Die Haftzugfestigkeiten wurden wie unten aufgeführt bestimmt. Die Probekörper wurden 7 Tage nach der Beschichtung mit einem Probestempel verklebt, welcher 2 Tage ausgehärtet wurde. Das Bruchbild wurde optisch begutachtet.

**Tabelle 5 Haftzugfestigkeiten und Bruchbilder der Verbundsysteme V2 bis V9.**

| Verbundsystem | Vorbehandlung | Abdichtung | Zementgemisch | Haftzugfestigkeit [N/mm²] | Bruchbild: Häufigkeit |
|---|---|---|---|---|---|
| V2^{a} | VB1: Schleifen, grundieren mit PMMA-Harz | Polyestervlies und PMMA-Harz | TFSS2 | 1,968 ± 0,058 | ^{b}: 5, ^{c}: 3 |
| V3 | | | BV | 0,622 ± 0,156 | ^{b}: 6 |
| V4 | | | VFZ | 0,843 ± 0,157 | ^{b}: 8 |
| V5 | | | SP | 1,577 ± 0,100 | ^{b}: 7, ^{c}: 1 |
| V6^{a} | VB2: Schleifen | Polyestervlies und PU-Harz | TFSS2 | 1,358 ± 0,133 | ^{c}: 4 |
| V7 | | | SP | 0,548 ± 0,040 | ^{d}: 4 |
| V8^{a} | VB3: Schleifen, grundieren mit Epoxidharz und Quarzsand (0,2 - 0,6 mm) | | TFSS2 | 1,955 ± 0,176 | ^{b}: 2, ^{c}: 2 |
| V9 | | | SP | 1,424 ± 0,165 | ^{b}: 4 |

| | | | | | |
|---|---|---|---|---|---|
| ^{a}: erfindungsgemäßes Verbundsystem; ^{b}: Kohäsionsbruch im Untergrund; ^{c}: Kohäsionsbruch in der Abdichtung; ^{d}: Adhäsionsbruch zwischen Untergrund und Beschichtung. | | | | | |

Das Zusammenspiel aus hoher Restfeuchte und mangelnder Festigkeit kommt es in V3 bereits vor der Abdichtung zur Ablösung der Grundierung vom mineralischen Untergrund. Diese Reaktionsstörungen ziehen sich durch das ganze System; es kommt zu einer starken Blasenbildung. Die weiteren Verbundsysteme weisen keine optischen Mängel auf.

Die Haftzugfestigkeit der Verbundsysteme V3, V4 und V7 liegt unter 1 N/mm². Dies ist unzureichend für begehbare Verbundsysteme. Die erfindungsgemäßen Verbundsysteme V2, V6 und V8 hingegen überschreiten diesen Wert signifikant.

Die erfindungsgemäßen Verbundsysteme V2 und V8 weisen mit Abstand die höchsten Haftzugfestigkeiten auf. Der Einsatz von PMMA-Harzen in der Grundierung erlaubt zudem eine schnelle Herstellung und Nutzung der V2.

### Bestimmung der Druckfestigkeit

Die Prüfung der Druckfestigkeit wurde nach DIN EN 13892-2:2003-02 "Prüfverfahren für Estrichmörtel und Estrichmassen - Teil 2: Bestimmung der Biegezug und Druckfestigkeit" mit einem Prüfgerät "Toniprax" der Firma ToniTechnik durchgeführt. Es wurden die sechs bei der Bestimmung der Biegezugfestigkeit entstandenen Bruchstücke als Probekörper verwendet. Die Prüfung fand direkt im Anschluss an die Bestimmung der Biegezugfestigkeit statt.

### Bestimmung der Biegezugfestigkeit

Die Prüfung der Biegezugfestigkeit wurde nach DIN EN 13892-2:2003-02 "Prüfverfahren für Estrichmörtel und Estrichmassen - Teil 2: Bestimmung der Biegezug und Druckfestigkeit" mit einem Prüfgerät "Toniprax" der Firma ToniTechnik durchgeführt. Für diese Prüfung wurden drei Prüfkörper (160 x 40 x 40 mm³) bei Normalklima (23 °C / 50 % RH) hergestellt und dort anschließend für die angegebene Dauer gelagert und anschließend gemessen.

### Bestimmung der Haftzugwerte

Die Prüfung der Haftzugfestigkeit wurde nach DIN EN 1542 "Produkte und Systeme für den Schutz und die Instandsetzung von Betontragwerken - Prüfverfahren - Messung der Haftfestigkeit im Abreißversuch" mit einem Prüfgerät "Easy-M" der Firma Freundl durchgeführt.

Die Stempel wurden 7 Tage nach dem Beschichten mit einem bei Raumtemperatur härtenden 2K-Epoxidklebstoff verklebt und zwei Tage bei Raumtemperatur ausgehärtet. Die Haftfestigkeitsmessung wurde mit einem Lastanstieg von 100 N/s durchgeführt.

### Bestimmung des Restfeuchtegehalts

Der Restfeuchtegehalt wurde mit Hilfe des Prüfgerätes "Hydromette UNI 2" bestimmt. Hierfür wird die Schalterstellung "M" und die Elektrode "B60" verwendet. Die erhaltenden Digits-Werte werden über die zum Gerät gehörende Umrechnungstabelle in CM% umgerechnet.

## Patentansprüche

1. Verbundsystem umfassend einen mineralischen Untergrund und mindestens eine Schicht enthaltend mindestens ein Polymer, wobei der mineralische Untergrund erhältlich ist durch Ausbringen einer Mischung umfassend Wasser und eine Zusammensetzung enthaltend einen Ye'elimit-haltigen Zement (Calcium-Sulfo-Aluminat-Zement) und optional Füllstoff.

2. Verbundsystem nach Anspruch 1, **dadurch gekennzeichnet, dass** das Polymer ein radikalisch ausgehärtetes Polymer umfasst, bevorzugt ein oder mehrere Polyacrylate, bevorzugter ein oder mehrere Polymethacrylate, besonders bevorzugt Polymethylmethacrylat.

3. Verbundsystem nach Anspruch 1 oder 2, **dadurch gekennzeichnet, dass** das Polymer aus einem radikalisch ausgehärtetem Polymer besteht, bevorzugt aus einem oder mehreren Polyacrylaten, bevorzugter aus einem oder mehreren Polymethacrylaten, besonders bevorzugt aus Polymethylmethacrylat.

4. Verbundsystem nach einem der vorherigen Ansprüche, **dadurch gekennzeichnet, dass** die Zusammensetzung Calcium-Sulfo-Aluminat-Zement zu mindestens 5 Gew.-%, bevorzugt zu 5-90 Gew.-%, bevorzugter zu 8-35 Gew.-%, besonders bevorzugt zu 12-25 Gew.-% enthält.

5. Verbundsystem nach einem der vorherigen Ansprüche, **dadurch gekennzeichnet, dass** die Zusammensetzung zu mindestens 2 Gew.-%, bevorzugt zu 2-90 Gew.-%, bevorzugter zu 3-35 Gew.-%, besonders bevorzugt zu 5-25 Gew.-% aus Ye'elimit besteht.

6. Verbundsystem nach einem der vorherigen Ansprüche, **dadurch gekennzeichnet, dass** die Zusammensetzung Calciumsulfat enthält, bevorzugt im Gewichtsverhältnis zu Ye'elimit von 0,05 bis 1,10, bevorzugter von 0,15 bis 95, besonders bevorzugt von 0,20 bis 0,75.

7. Verbundsystem nach einem der vorherigen Ansprüche, **dadurch gekennzeichnet, dass** die Zusammensetzung einen weiteren Zement enthält, bevorzugt Portlandzement, vorzugsweise bis zu 10 Gew.-%, bevorzugt bis zu 5 Gew.-%, besonders bevorzugt bis zu 2 Gew.-%.

8. Verbundsystem nach einem der vorherigen Ansprüche, **dadurch gekennzeichnet, dass** die Zusammensetzung folgende Bestandteile umfasst
- Calcium-Sulfo-Aluminat-Zement zu mindestens 5 Gew.-%, bevorzugt zu 5-90 Gew.-%, bevorzugter zu 8-35 Gew.-%, besonders bevorzugt zu 12-25 Gew.-%,
- 0-1,10, bevorzugt 0-0,95, bevorzugter 0,15-0,95, besonders bevorzugt 0,4-1,2 Anteile Calciumsulfat im Gewichtsverhältnis zu Ye'elimit,
- 0-10 Gew.-%, bevorzugt 0-5 Gew.-%, bevorzugter 0-2 Gew.-% Portlandzement,
- 0-6 Gew.-%, bevorzugt 0-3 Gew.-%, bevorzugter 0-2 Gew.-% Dispersionspulver,
- 0-95 Gew.-%, bevorzugt 0-93 Gew.-%, bevorzugter 0-87 Gew.-%, besonders bevorzugt 0-82 Gew.-% Füllstoff,
- 0-20 Gew.-%, bevorzugt 2-15 Gew.-%, bevorzugter 3-10 Gew.-% Feinanteile,
- 0-5 Gew.-%, bevorzugt 0-3 Gew.-%, bevorzugter 0-1,5 Gew.-% sonstige Bestandteile, insbesondere Fließhilfsmittel, Beschleuniger, Verzögerer, Fasern, Verdicker und/oder Porenbilder.

9. Verfahren zur Herstellung eines Verbundsystems umfassend die folgenden Schritte
a) Herstellen eines mineralischen Untergrunds durch Ausbringen einer Mischung umfassend Wasser und eine Zusammensetzung enthaltend Ye'elimit-haltigen Zement (Calcium-Sulfo-Aluminat-Zement) und optional Füllstoff,
b) optional Bearbeiten des mineralischen Untergrunds, bevorzugt Schleifen,
c) optional Grundieren des Untergrunds, vorzugsweise mit einem aushärtbaren Harz,
d) Ausbringen eines aushärtbaren Harzes.

10. Verfahren nach Anspruch 9, **dadurch gekennzeichnet, dass** der Schritt d) maximal bis zu 20 h, bevorzugt maximal bis zu 12 h, weiter bevorzugt maximal bis zu 3 h nach Schritt a) erfolgt.

11. Verfahren nach Anspruch 9 oder 10, **dadurch gekennzeichnet, dass** als aushärtbares Harz in Schritt d) ein radikalisch aushärtbares Harz, bevorzugt enthaltend ein Acrylatharz, bevorzugter ein Methacrylatharz, besonders bevorzugt ein Methylmethacrylatharz eingesetzt wird.

12. Verfahren nach Anspruch 11, **dadurch gekennzeichnet, dass** als aushärtbares Harz in Schritt c) ein radikalisch aushärtbares Harz, bevorzugt enthaltend ein Acrylatharz, bevorzugter ein Methacrylatharz, besonders bevorzugt ein Methylmethacrylatharz eingesetzt wird.

13. Verfahren nach Anspruch 9 oder 10, **dadurch gekennzeichnet, dass** als aushärtbares Harz in Schritt c) ein Epoxidharz und in Schritt d) ein Polyurethanharz eingesetzt werden.

14. Verfahren nach einem der Ansprüche 9 bis 13, **dadurch gekennzeichnet, dass** der mineralische Untergrund mit einem Gefälle, vorzugsweise einem Gefälle von 1,5% bis 2% ausgebracht wird.

15. Verfahren nach einem der Ansprüche 9 bis 14, **dadurch gekennzeichnet, dass** die Zusammensetzung definiert ist nach einem der Ansprüche 4 bis 8.
